Europäisches Patentamt

European Patent Office

Office européen des brevets

(11) Publication number: **0 375 639**
A2

# EUROPEAN PATENT APPLICATION

(21) Application number: 89830564.4

(51) Int. Cl.5 **G09F 3/00**

(22) Date of filing: 22.12.89

(30) Priority: 22.12.88 IT 2231388 U

(43) Date of publication of application:
27.06.90 Bulletin 90/26

(84) Designated Contracting States:
AT BE CH DE ES FR GB LI NL

(71) Applicant: TESI ELETTRONICA E SISTEMI
INFORMATIVI S.R.L.
Viale Molise, 64
I-20137 Milano(IT)

(72) Inventor: Anania, Gianni c/oTesi Elet.e
Sistemi
Informativi S.r.l. Via Molise 64
20137 Milano(IT)

(74) Representative: Cicogna, Franco
Ufficio Internazionale Brevetti Dott.Prof.
Franco Cicogna Via Visconti di Modrone,
14/A
I-20122 Milano(IT)

(54) Identification card for sanitary use.

(57) The identification card comprises a plastic material plate thereon there are printed an identification code, the particulars of the user and clinic data of the user, the plate being removably mounted on a supporting module which can also be personaliz-ed depending on the specific requirements of the user.

Fig.3

EP 0 375 639 A2

## IDENTIFICATION CARD FOR SANITARY USE

### BACKGROUND OF THE INVENTION

The present invention relates to an identification card for sanitary use.

As is known to each person accessing sanitary organizations (such as analysis laboratories,hospitals and the like) there is usually assigned a card member thereon,in addition to the user's particulars and other data necessary for establishing a proper sanitary profile,there are recorded the type and number of the provided sanitary services.

This data is usually manually written on the card,which is then stored for future use.

Thus,for any subsequent services, the patient card must be recovered from the file,which requires a comparatively long time,

Moreover,in the case of patients having the same particulars,this time will be very long with a consequent great delay in performing the sanitary services.

### SUMMARY OF THE INVENTION

Accordingly,the aim of the present invention is to overcome the above mentioned drawbacks by providing a sanitary identifying card which is specifically designed and studied for sanitary organization users.

Within the scope of the above aim,a main object of the present invention is to provide such a sanitary identification card which is provided with at least a portion thereon data can be printed by a printer controlled by a Personal Computer (PC).

Another object of the present invention is to provide such a sanitary identification card which can drastically reduce the patient acceptance time so as to improve the image of the interested sanitary organization.

Another object of the present invention is to provide such a sanitary identification card which can also be advantageously used as a clinic card for the patient.

According to one aspect of the present invention,the above mentioned aim and objects,as well as yet other objects,which will become more apparent hereinafter,are achieved by a sanitary identification card characterized in that said sanitary card substantially comprises a plastic material card,of the type of a credit card and the like,and thereon there are printed an identification code,the particulars of the user as well as clinic data of said user,said plate being removably mounted on a supporting module which is also susceptible to be personalized depending on requirements of the user.

### BRIEF DESCRIPTION OF THE DRAWINGS

Further characteristics and advantages of the identification card according to the present invention will become more apparent hereinafter from the following detailed disclosure of a preferred,though not exclusive,embodiment thereof,which is illustrated,by way of an indicative but not limitative example,in the figures of the accompanying drawings,where:

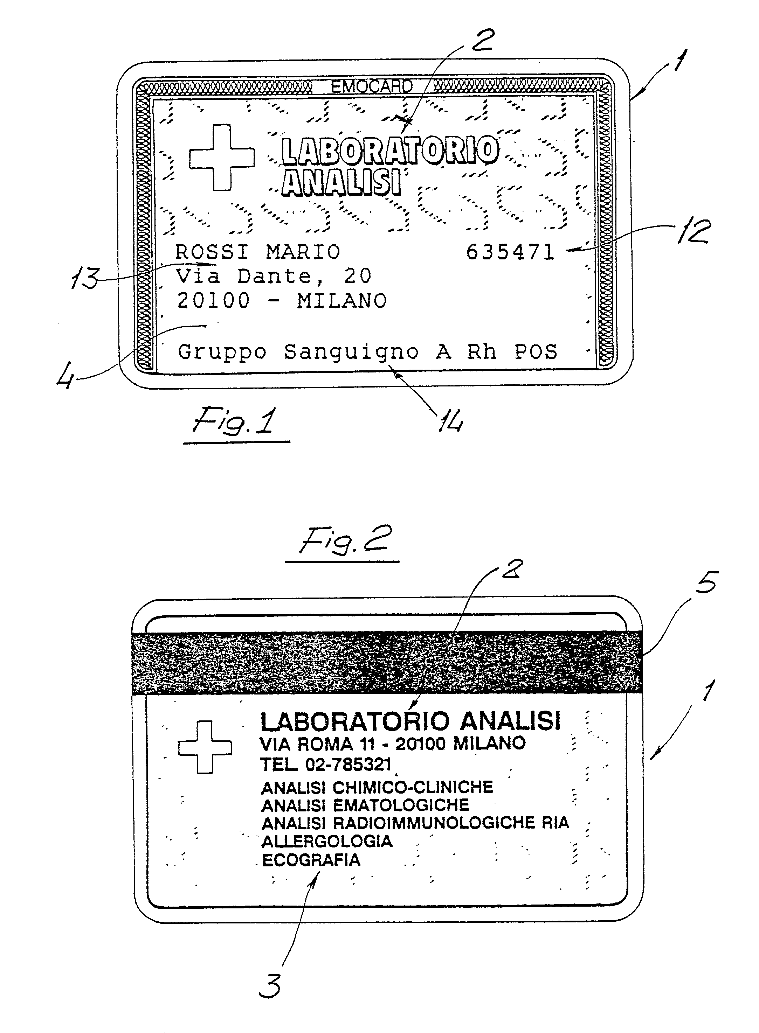

FIGURES 1 and 2 are respectively a front and rear view of the sanitary card according to the present invention; and

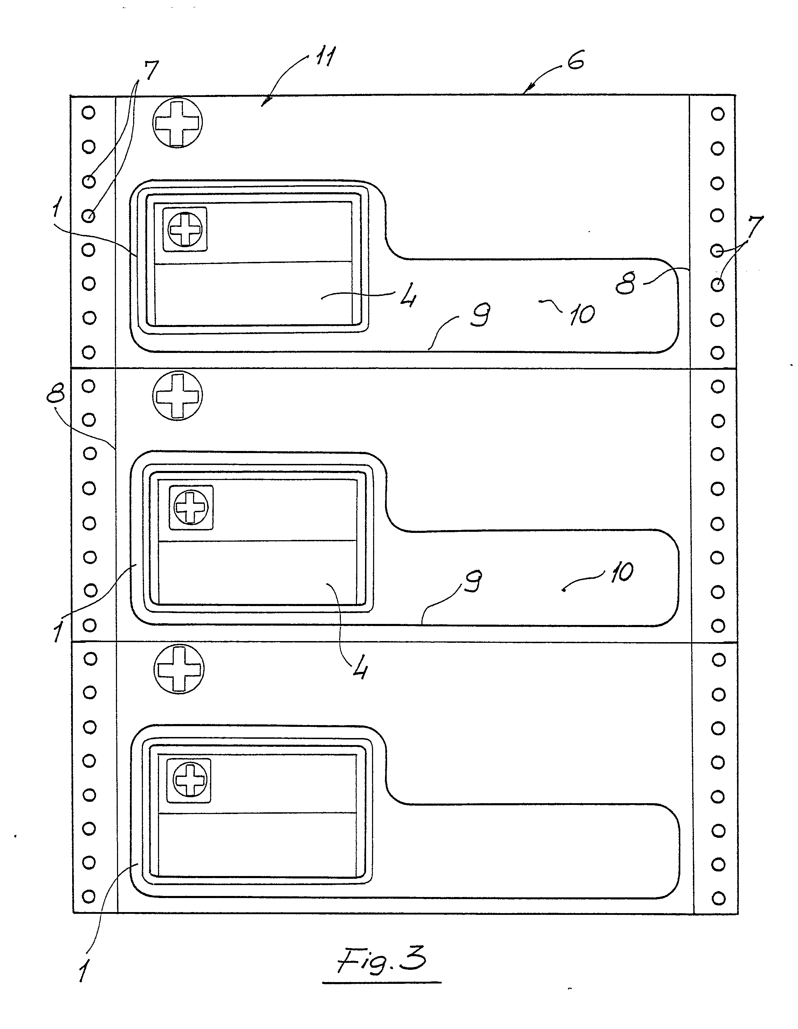

FIGURE 3 shows a plurality of sanitary cards assembled on a continuous supporting module.

### DESCRIPTION OF THE PREFERRED EMBODIMENT

With reference to the figures of the accompanying drawings,the sanitary identification card according to the present invention comprises a rectangular plate 1, preferably made of PVC and having a thickness of 0.3mm.

This plate bears directly printed thereon wordings 2 indicative of the specific sanitary organization (such clinical analysis laboratories,hospitals and the like ) releasing the card,as well as possible data on sanitary services provided to the user,and which have been indicated at the reference number 3.

On the front side of the plate there is provided a zone 4 which has been surface processed so as to render said zone suitable for writing or printing thereon,for example by a conventional printer controlled by a Personal Computer.

The thus processed plate 1 is moreover provided with a magnetic band 5 and is applied,in a plurality of like plates,on a continuous supporting module 6 provided with side perforations 7 and side 8 and cross 9 pre-breaking lines.

More specifically the above mentioned cross pre-breaking lines define,on said module,corresponding strips which can be individually removed and each of which bears,at an offset position,one of the mentioned plates.

Each strip,moreover,has such a size as to be introduced into a standardized envelope provided with a conventional window,to be mailed,and is provided,at least at said window,with a suitable space 10 thereon will be printed the name and address of the user provided for receiving the card.

On the available portions of the same strip can also be printed,in addition to the name of the sanitary organization releasing the card,necessary data for a proper use of the sanitary card.

In particular this data will comprise an identification code 12 as well as the full particulars of the user,included his/her address and birth date 13.

On the card will be moreover provided data concerning a possible pertaining organization of the user,his/her blood group and phenotype 14,as well as other data relating to the clinic status of the user (such as old deseases,allergies and the like).

Thus,owing to the invention,an user accessing for the first time a sanitary organization can be advantageously provided with a personal identification document.

This document affords the possibility of easily and quickly recovering,in a future time,the data relating to the user,as stored,for example in an electronic file.

The stored data,in particular,can be recovered both by digitizing the identification code of the patient and by reading,through a suitable read out device,the magnetic band on the card.

From the above disclosure it should be apparent that the invention fully achieves the intended aim and objects.

While the invention has been disclosed and illustrated with reference to a preferred embodiment thereof,it should be apparent that the disclosed embodiment is susceptible to several modifications and variations all of which will come within the spirit and scope of the appended claims.

## Claims

1- A sanitary identification card characterized in that said card comprises a plastic material small plate,substantially of the type of a credit card,thereon there are printed,by a printer,an identification code as well as the particulars of an user and clinic data of said user,said plate being removably mounted on a supporting module also personalized based on requirements of said user.

2- A sanitary identification card according to claim 1,characterized in that said plate has a rectangular shape and is made of a PVC sheet material having a thickness of 0.3 mm,on said plate there being directly printed wordings indicative of the releasing sanitary organization,as well as wordings relating to performed clinical services.

3- A sanitary identification card,according to the preceding claims,characterized in that,on the front of said plate,there is provided a surface processed zone thereon it is possible both to write and print by a printer controlled by a personal computer.

4- A sanitary identification card according to one or more of the preceding claims,characterized in that said plate comprises a magnetic band and is applied,in a plurality of like cards,on a continuous supporting module including side perforations and pre-breaking side and cross lines,the cross pre-breaking lines defining on said module removable strips each of which bears at an offset position one of said plates.

5- A sanitary identification card according to one or more of the preceding claims,characterized in that each said strip has such a size as to be introduced into a standardized mailing envelope provided with a window and is provided,at least at said window,with a suitable space thereon can be printed the name and address of the user who must receive said card.

6- A sanitary identification card according to one or more of the preceding claims,characterized in that on available portions of said strip can be preliminary printed,in addition to the sanitary organization name,other data for a proper use of said card.

7- A sanitary identification card according to one or more of the preceding claims,characterized in that on said card there are printed an identification code number,the full particulars of the user,including his/her address and birth date,as well as other data indicative of a possible pertaining organization,blood group and phenotype of the user,as well as clinic data of said user.

ROSSI MARIO          635471
Via Dante, 20
20100 - MILANO

Gruppo Sanguigno A Rh POS

_Fig.1_

_Fig.2_

LABORATORIO ANALISI
VIA ROMA 11 - 20100 MILANO
TEL. 02-785321
ANALISI CHIMICO-CLINICHE
ANALISI EMATOLOGICHE
ANALISI RADIOIMMUNOLOGICHE RIA
ALLERGOLOGIA
ECOGRAFIA

*Fig.3*